# EUROPÄISCHE PATENTANMELDUNG

(11) **EP 2 062 771 A1**
(43) Veröffentlichungstag der Anmeldung: **27.05.2009**
(21) Anmeldenummer: 07022599.0
(22) Anmeldetag: 21.11.2007
(51) Int. Cl.: B60N 2/00, B60N 2/56

(54) **Sitzheizungs- und Sicherheitsgurtwarnsystem**

(71) Anmelder: Delphi Technologies, Inc., Troy, Michigan 48007 (US)
(72) Erfinder: Fischer, Thomas, 57482 Wenden (DE)
(74) Vertreter: Manitz, Finsterwald & Partner GbR

(57) **Zusammenfassung**

Ein Sitzheizungs- und Sicherheitsgurtwarnsystem (10) für Fahrzeuge umfasst eine in Form einer flexiblen gedruckten Schaltung vorgesehene flexible Leiterfolie (12), die sowohl wenigstens eine gedruckte Heizleiterbahn (14) als auch wenigstens einen in Form einer flexiblen gedruckten Schaltung vorgesehenen Schalter (16) aufweist, der in Abhängigkeit von dem auf ihn wirkenden Druck betätigbar ist, um gegebenenfalls ein Gurtwarnsignal zu erzeugen.

## Beschreibung

Die Erfindung betrifft ein Sitzheizungs- und Sicherheitsgurtwarnsystem für Fahrzeuge.

Modernere Fahrzeuge werden nicht nur mit Sitzheizungen, sondern zunehmend auch mit Sicherheitsgurtwarnsystemen ausgestattet, die bei einem jeweiligen durch das Gewicht einer Person belasteten Fahrzeugsitz ein Warnsignal erzeugen, falls der Sicherheitsgurt nicht angelegt wird. Dabei waren das Sitzheizungssystem und das Sicherheitsgurtwarnsystem bisher stets getrennt voneinander ausgelegt. So umfasst ein herkömmliches Sitzheizungssystem beispielsweise eine Heizmatte mit in das Grundmaterial der Matte eingewobenen Wolframdrähten, die unter der Sitzverkleidung installiert ist. Ein herkömmliches Sicherheitsgurtwarnsystem umfasst beispielsweise einen auf Graphit-Komposit basierenden Sensor auf einer PET (Polyethylenterephthalat)-Folie mit einer Kontaktfarbe, deren Widerstand sich in Abhängigkeit von dem einwirkenden Druck ändert.

Der Erfindung liegt die Aufgabe zugrunde, den für die Sitzheizung und das Sicherheitsgurtwarnsystem eines jeweiligen Fahrzeugs erforderlichen Aufwand unter Aufrechterhaltung einer möglichst optimalen Funktionsweise zu minimieren.

Diese Aufgabe wird erfindungsgemäß gelöst durch ein Sitzheizungs- und Sicherheitsgurtwarnsystem für Fahrzeuge, mit einer in Form einer flexiblen gedruckten Schaltung vorgesehenen flexiblen Leiterfolie, die sowohl wenigstens eine gedruckte Heizleiterbahn als auch wenigstens einen in Form einer flexiblen gedruckten Schaltung vorgesehenen Schalter umfasst, der in Abhängigkeit von dem auf ihn wirkenden Druck betätigbar ist, um gegebenenfalls ein Gurtwarnsignal zu erzeugen.

Damit sind die Funktionen der Sitzheizung und der Sicherheitsgurtwarneinrichtung in einem einzigen System integriert, was insbesondere eine beträchtliche Einsparung an Herstellungskosten mit sich bringt. Das erfindungsgemäße System vereinigt in sich sowohl die Funktion einer Sitzheizmatte als auch die Funktion einer Sicherheitsgurtwarnmatte. Mit der in Form einer flexiblen gedruckten Schaltung vorgesehenen flexiblen Leiterfolie können zur Verwirklichung der Funktion der Sitzheizung und der Funktion der Sicherheitsgurtwarneinrichtung dieselben Materialien verwendet werden. Der zusätzliche Aufwand für die Sicherheitsgurtwarnfunktion ist daher vernachlässigbar. Hinzu kommt, dass durch die Verwirklichung in Form einer flexiblen gedruckten Schaltung bzw. flexiblen Leiterfolie bereits der Aufwand für die Sitzheizungsfunktion als solche gegenüber den bisher üblichen Sitzheizungsmatten mit Wolframheizdrähten deutlich herabgesetzt ist. Ein wesentliches Einsparungspotenzial ergibt sich insbesondere auch insoweit, als in Europa nahezu jedes Fahrzeug inzwischen auch mit einer Sicherheitsgurtwarneinrichtung versehen ist, die zunehmend insbesondere auch auf der Fahrerseite installiert wird.

Gemäß einer bevorzugten praktischen Ausführungsform des erfindungsgemäßen Systems ist in die flexible Leiterfolie zudem zumindest eine Antennenstruktur für ein insbesondere transponderbasiertes Kindersitzerfassungssystem integriert.

In dem Sitzheizungs- und Sicherheitsgurtwarnsystem kann also insbesondere auch wenigstens eine Antenne zum Aussenden und/ oder Empfangen von elektromagnetischen Signalen integriert sein. Eine solche Antenne kann beispielsweise mit einem einem Kindersitz zugeordneten Transponder zusammenwirken.

Der Grundkörper der flexiblen Leiterfolie besteht vorteilhafterweise aus PET (Polyethylenterephthalat).

Gemäß einer zweckmäßigen praktischen Ausführungsform ist die gedruckte Heizleiterbahn insbesondere kurvenartig über und/oder um den Grundkörper der flexiblen Leiterfolie geführt.

Die gedruckte Heizleiterbahn besteht vorzugsweise aus Kupfer.

Von Vorteil ist insbesondere, wenn die flexible Leiterfolie mit einer die gedruckte Heizleiterbahn bildenden, insbesondere aus Kupfer bestehenden leitenden Schicht versehen ist, deren Dicke z.B. im Bereich von etwa 20 µm liegt.

Zweckmäßigerweise ist außen auf die gedruckte Heizleiterbahn bzw. leitende Schicht eine insbesondere aus PET bestehende Isolierfolie aufgebracht.

Gemäß einer bevorzugten praktischen Ausführungsform des erfindungsgemäßen Systems ist der in Form einer gedruckten Schaltung vorgesehene Schalter so ausgelegt, dass er betätigt wird, sobald der auf ihn wirkende Druck einen vorgebbaren Wert überschreitet.

Dabei kann der vorgebbare Wert beispielsweise im Bereich von 1 Newton liegen.

Die Antennenstruktur für das insbesondere transponderbasierte Kindersitzerfassungssystem kann in die Leiterbahnstruktur bzw. Kupferstruktur der flexiblen Leiterfolie integriert sein.

Eine zweckmäßige praktische Ausführungsform zeichnet sich dadurch aus, dass die flexible Leiterfolie wenigstens zwei jeweils wenigstens eine gedruckte Heizleiterbahn umfassende Heizzonen und wenigstens zwei zwischen zwei benachbarten Heizzonen angeordnete, in Form einer gedruckten Schaltung vorgesehene Schalter umfasst.

Bevorzugt umfasst die Antennenstruktur wenigstens eine Sendeantenne und/oder wenigstens eine Empfangsantenne.

Gemäß einer bevorzugten praktischen Ausführungsform des erfindungsgemäßen Systems umfasst ein jeweiliger in Form einer gedruckten Schaltung vorgesehener Schalter einen elektrischen Innen- und einen elektrischen Außenkontakt, die randseitig durch wenigstens einen flexiblen Abstandshalter voneinander getrennt sind, wobei der Außenkontakt bei einer entsprechenden Druckbeaufschlagung zum Innenkontakt hin eindrückbar ist.

In diesem Fall kann eine Betätigung des Schalters also dadurch erfolgen, dass der Außenkontakt durch eine entsprechende Druckbeaufschlagung zum Innenkontakt hin eingedrückt wird und diesen berührt.

Der Innenkontakt kann insbesondere auf dem Grundkörper der flexiblen Leiterfolie aufgeklebt sein.

Auf den Außenkontakt ist vorzugsweise eine insbesondere aus PET bestehende äußere Isolierfolie aufgebracht, insbesondere aufgeklebt.

Dabei kann mit einer solchen äußeren Isolierfolie sowohl der Schalter bzw. dessen Außenkontakt als auch die gedruckte Heizleiterbahn überdeckt sein.

Der flexible Abstandshalter kann mit dem Außen- und Innenkontakt verklebt sein.

Der flexible Abstandshalter kann insbesondere auch ein Isolierband umfassen.

Dabei weist der flexible Abstandshalter zwischen dem Isolierband und dem Außenkontakt und zwischen dem Isolierband und dem Innenkontakt zweckmäßigerweise jeweils ein Laminat auf.

Die Laminate können jeweils mit dem Isolierband und dem betreffenden Kontakt verklebt sein.

Die Funktion der Sitzheizung kann also durch eine flexible Leiterfolie in Form einer flexiblen gedruckten Schaltung mit einer Kupferschicht mit einer Dicke von beispielsweise etwa 20 µm verwirklicht werden, die kurvenartig um die insbesondere aus PET bestehende Kunststofffolie geführt und nach außen durch eine ebenfalls beispielsweise wieder aus PET bestehende Folie isoliert ist. Die Funktion der Sicherheitsgurtwarneinrichtung kann durch einen Schalter verwirklicht sein, der ebenfalls wieder in Form einer flexiblen gedruckten Schaltung ausgeführt ist und betätigt bzw. geschlossen wird, sobald der auf ihn wirkende Druck höher als ein vorgebbarer Wert, beispielsweise höher als 1 Newton ist, um die Erfordernisse einer Sicherheitsgurtwarnfunktion zu erfüllen. Zudem kann wenigstens eine Antennenstruktur für eine insbesondere transponderbasierte Kindersitzerkennung in der Leiter- bzw. Kupferstruktur des Sitzheizungs- und Sicherheitsgurtwarnsystems integriert sein.

Die Erfindung wird im Folgenden anhand von Ausführungsbeispielen unter Bezugnahme auf die Zeichnung näher erläutert; in dieser zeigen:
- Fig. 1: eine schematische Draufsicht einer beispielhaften Ausführungsform eines integrierten Sitzheizungs- und Sicherheitsgurtwarnsystems und
- Fig. 2: eine schematische Querschnittsdarstellung einer beispielhaften Ausführungsform eines im Sitzheizungsund Sicherheitsgurtwarnsystem integrierten, der Erfüllung der Sicherheitsgurtwarnfunktion dienenden Schalters.

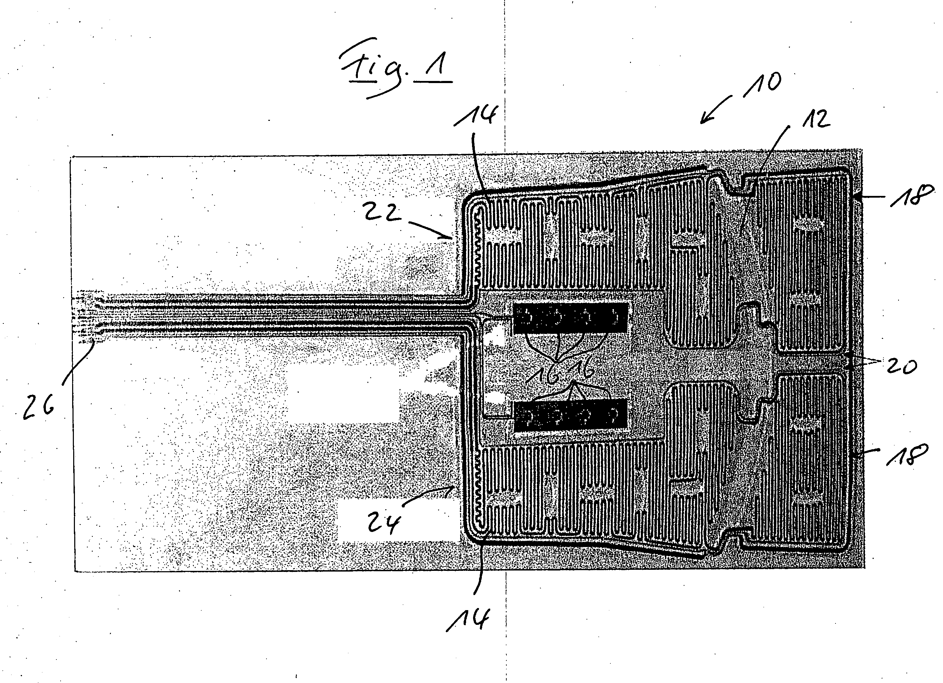

Fig. 1 zeigt in schematischer Draufsicht eine beispielhafte Ausführungsform eines integrierten Sitzheizungs- und Sicherheitsgurtwarnsystems 10 für Fahrzeuge.

Das Sitzheizungs- und Sicherheitsgurtwarnsystem 10 umfasst eine in Form einer flexiblen gedruckten Schaltung (FPC, flexible printed circuit) vorgesehene flexible Leiterfolie 12, die sowohl wenigstens eine gedruckte Heizleiterbahn 14 als auch wenigstens einen in Form einer flexiblen gedruckten Schaltung vorgesehenen Schalter 16 aufweist, der in Abhängigkeit von dem auf ihn wirkenden Druck betätigbar ist, um gegebenenfalls ein Gurtwarnsignal zu erzeugen.

In die flexible Leiterfolie 12 kann zudem zumindest eine beispielsweise wenigstens eine Empfangsantenne und/oder wenigstens eine Sendeantenne 20 umfassende Antennenstruktur 18, 20 für ein insbesondere transponderbasiertes Kindersitzerfassungssystem integriert sein.

Der Grundkörper der flexiblen Leiterfolie 12 kann insbesondere aus PET (Polethylenterephthalat) bestehen.

Die gedruckte Heizleiterbahn 14 kann insbesondere kurvenartig über und/oder um den Grundkörper der flexiblen Leiterfolie 12 geführt sein.

Die gedruckte Heizleiterbahn 14 besteht bevorzugt aus Kupfer.

Dabei kann die flexible Leiterfolie 12 beispielsweise mit einer die gedruckte Heizleiterbahn 14 bildenden, insbesondere aus Kupfer bestehenden dünnen leitenden Schicht versehen sein. Die Dicke dieser leitenden Schicht kann beispielsweise im Bereich von etwa 20 µm liegen.

Außen auf die gedruckte Heizleiterbahn 14 bzw. leitende Schicht kann eine insbesondere aus einem Kunststoff wie beispielsweise PET bestehende Isolierfolie aufgebracht sein.

Die Antennenstruktur 18, 20 für das insbesondere transponderbasierte Kindererfassungssystem ist zweckmäßigerweise in die Leiterbahnstruktur bzw. Kupferstruktur der flexiblen Leiterfolie 14 integriert.

Beim vorliegenden Ausführungsbeispiel umfasst die flexible Leiterfolie 12 zwei jeweils wenigstens eine gedruckte Heizleiterbahn 14 umfassende Heizzonen, hier zum Beispiel eine linke Heizzone 22 und eine rechte Heizzone 24, und wenigstens zwei zwischen den beiden benachbarten Heizzonen 22, 24 angeordnete, in Form einer flexiblen gedruckten Schaltung vorgesehene Schalter 16. Beim vorliegenden Ausführungsbeispiel sind der linken und der rechten Heizzone 22 bzw. 24 benachbart jeweils vier solche der Erfüllung der Sicherheitsgurtwarnfunktion dienende Schalter 16 vorgesehen.

Die Antennenstruktur 18, 20 für das insbesondere transponderbasierte Kindersitzerfassungssystem umfasst im vorliegenden Fall sowohl auf der linken als auch auf der rechten Seite der flexiblen Leiterfolie 12 jeweils sowohl eine Empfangsantenne 18 als auch eine Sendeantenne 20. Dabei kann als Empfangsantenne beispielsweise jeweils eine Rotationsantenne vorgesehen sein.

Die wenigstens eine gedruckte Heizleiterbahn 14 und der wenigstens eine Schalter 16 sowie vorzugsweise auch die Antennenstruktur 18, 20 können durch eine aus einem Kunststoff wie beispielsweise PET bestehende Isolierfolie abgedeckt sein.

Die Dicke des Grundkörpers der flexiblen Leiterfolie 12 und/oder der Isolierfolie kann beispielsweise im Bereich von 50 µm liegen. Grundsätzlich sind jedoch auch andere Dicken denkbar. Bevorzugt ist jedoch auch die Isolierfolie flexibel.

Wie anhand der Fig. 1 zu erkennen ist, ist die flexible Leiterfolie 14 mit einer Schnittstelle 26 versehen, die im vorliegenden Fall beispielsweise 16 Pins umfasst.

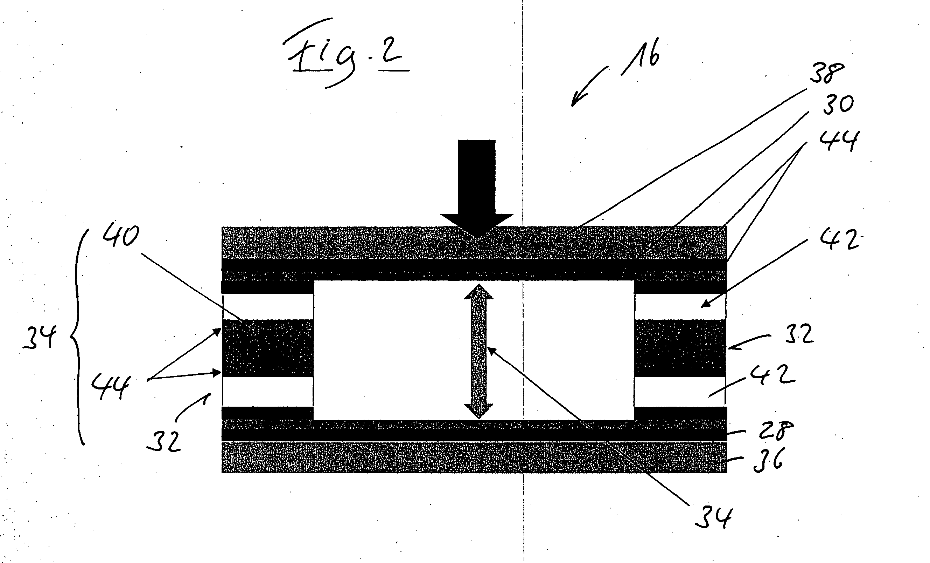

Fig. 2 zeigt in schematischer Querschnittsdarstellung eine beispielhafte Ausführungsform eines im Sitzheizungs- und Sicherheitsgurtwarnsystem 10 integrierten, der Erfüllung der Sicherheitsgurtwarnfunktion dienenden Schalters 16.

Der in Form einer flexiblen gedruckten Schaltung vorgesehene Schalter 16 ist so ausgelegt, dass er betätigt wird, sobald der auf ihn wirkende Druck einen vorgebbaren Wert überschreitet. Dabei kann dieser vorgebbare Wert beispielsweise im Bereich von 1 Newton liegen.

Der Schalter 16 umfasst einen elektrischen Innen- und einen elektrischen Außenkontakt 28 bzw. 30, die jeweils wieder insbesondere aus Kupfer bestehen können. Dabei sind diese beiden Kontakte 28, 30 randseitig durch wenigstens einen insbesondere flexiblen Abstandshalter 32 voneinander getrennt. Bei einer entsprechenden Druckbeaufschlagung ist der Außenkontakt 30 zum Innenkontakt 28 hin eindrückbar. Der entsprechende Kontaktbereich ist in der Fig. 2 mit "34" bezeichnet.

Der Innenkontakt 28 kann auf dem Grundkörper 36 der flexiblen Leiterfolie 12 (vgl. auch Fig. 1) aufgeklebt sein.

Auf den Außenkontakt 30 kann eine insbesondere aus einem Kunststoff wie beispielsweise PET bestehende äußere Isolierfolie 38 aufgebracht, insbesondere aufgeklebt sein. Durch diese Isolierfolie 38 kann insbesondere auch die wenigstens eine gedruckte Heizleiterbahn 14 und/oder die Antennenstruktur 18, 20 überdeckt sein.

Der wenigstens eine flexible Abstandshalter 32 kann mit dem Außen- und dem Innenkontakt 28 bzw. 30 verklebt sein.

Zudem kann der flexible Abstandshalter 32 beispielsweise ein Isolierband 40 umfassen. Darüber hinaus kann der flexible Abstandshalter 32 zwischen dem Isolierband 40 und dem Außenkontakt 30 und zwischen dem Isolierband 40 und dem Innenkontakt 28 jeweils ein Laminat 42 aufweisen. Die Laminate 42 können jeweils mit dem Isolierband 40 und dem betreffenden Kontakt 28 bzw. 30 verklebt sein.

Wie bereits erwähnt, kann der ganze Schalter 16 einschließlich des wenigstens einen Abstandshalters 32 wieder in Form einer flexiblen gedruckten Schaltung ausgeführt sein.

In der Fig. 2 sind die verschiedenen Klebschichten jeweils mit "44" bezeichnet.

### Bezugszeichenliste

- 10: Sitzheizungs- und Sicherheitsgurtwarnsystem
- 12: flexible Leiterfolie
- 14: gedruckte Heizleiterbahn
- 16: Schalter
- 18: Antennenstruktur, Empfangsantenne
- 20: Antennenstruktur, Sendeantenne
- 22: Heizzone
- 24: Heizzone
- 26: Schnittstelle
- 28: elektrischer Innenkontakt
- 30: elektrischer Außenkontakt
- 32: Abstandshalter
- 34: Kontaktbereich
- 36: Grundkörper
- 38: Isolierfolie
- 40: Isolierband
- 42: Laminat

## Patentansprüche

1. Sitzheizungs- und Sicherheitsgurtwarnsystem (10) für Fahrzeuge, mit einer in Form einer flexiblen gedruckten Schaltung vorgesehenen flexiblen Leiterfolie (12), die sowohl wenigstens eine gedruckte Heizleiterbahn (14) als auch wenigstens einen in Form einer flexiblen gedruckten Schaltung vorgesehenen Schalter (16) umfasst, der in Abhängigkeit von dem auf ihn wirkenden Druck betätigbar ist, um gegebenenfalls ein Gurtwarnsignal zu erzeugen.

2. System nach Anspruch 1,
**dadurch gekennzeichnet,**
**dass** in die flexible Leiterfolie (12) zudem zumindest eine Antennenstruktur (18, 20) für ein insbesondere transponderbasiertes Kindersitzerfassungssystem integriert ist.

3. System nach Anspruch 1 oder 2,
**dadurch gekennzeichnet,**
**dass** der Grundkörper der flexiblen Leiterfolie (12) aus PET (Polyethylenterephthalat) besteht.

4. System nach einem der vorhergehenden Ansprüche,
**dadurch gekennzeichnet,**
**dass** die gedruckte Heizleiterbahn (14) insbesondere kurvenartig über und/ oder um den Grundkörper der flexiblen Leiterfolie (12) geführt ist.

5. System nach einem der vorhergehenden Ansprüche,
**dadurch gekennzeichnet,**
**dass** die gedruckte Heizleiterbahn (14) aus Kupfer besteht.

6. System nach einem der vorhergehenden Ansprüche,
**dadurch gekennzeichnet,**
**dass** die flexible Leiterfolie (12) mit einer die gedruckte Heizleiterbahn (14) bildenden, insbesondere aus Kupfer bestehenden leitenden Schicht versehen ist, deren Dicke vorzugsweise im Bereich von etwa 20 µm liegt.

7. System nach einem der vorhergehenden Ansprüche,
**dadurch gekennzeichnet,**
**dass** außen auf die gedruckte Heizleiterbahn (14) bzw. leitende Schicht eine insbesondere aus PET bestehende Isolierfolie aufgebracht ist.

8. System nach einem der vorhergehenden Ansprüche,
**dadurch gekennzeichnet,**
**dass** der in Form einer flexiblen gedruckten Schaltung vorgesehene Schalter (16) so ausgelegt ist, dass er betätigt wird, sobald der auf ihn wirkende Druck einen vorgebbaren Wert überschreitet.

9. System nach Anspruch 8,
**dadurch gekennzeichnet,**
**dass** der vorgebbare Wert im Bereich von 1 Newton liegt.

10. System nach einem der vorhergehenden Ansprüche,
**dadurch gekennzeichnet,**
**dass** die Antennenstruktur (18, 20) für das insbesondere transponderbasierte Kindersitzerfassungssystem in die Leiterbahnstruktur bzw. Kupferstruktur der flexiblen Leiterfolie (12) integriert ist.

11. System nach einem der vorhergehenden Ansprüche,
**dadurch gekennzeichnet,**
**dass** die flexible Leiterfolie (12) wenigstens zwei jeweils wenigstens eine gedruckte Heizleiterbahn umfassende Heizzonen (22, 24) und wenigstens zwei zwischen zwei benachbarten Heizzonen (22, 24) angeordnete, in Form einer flexiblen gedruckten Schaltung vorgesehene Schalter (16) umfasst.

12. System nach einem der vorhergehenden Ansprüche,
**dadurch gekennzeichnet,**
**dass** die Antennenstruktur (18, 20) wenigstens eine Sendeantenne (20) und/oder wenigstens eine Empfangsantenne (18) umfasst.

13. System nach einem der vorhergehenden Ansprüche,
**dadurch gekennzeichnet,**
**dass** ein jeweiliger in Form einer flexiblen gedruckten Schaltung vorgesehener Schalter (16) einen elektrischen Innen- und einen elektrischen Außenkontakt (28, 30) umfasst, die randseitig durch wenigstens einen insbesondere flexiblen Abstandshalter (32) voneinander getrennt sind, wobei der Außenkontakt (30) bei einer entsprechenden Druckbeaufschlagung zum Innenkontakt (28) hin eindrückbar ist.

14. System nach einem der vorhergehenden Ansprüche,
**dadurch gekennzeichnet,**
**dass** der Innenkontakt (28) auf den Grundkörper (36) der flexiblen Leiterfolie (12) aufgeklebt ist.

15. System nach einem der vorhergehenden Ansprüche,
**dadurch gekennzeichnet,**
**dass** auf den Außenkontakt (30) eine insbesondere aus PET bestehende äußere Isolierfolie (38) aufgebracht, insbesondere aufgeklebt ist.

16. System nach einem der vorhergehenden Ansprüche,
**dadurch gekennzeichnet,**
**dass** der flexible Abstandshalter (32) mit dem Außen- und dem Innenkontakt (28 bzw. 30) verklebt ist.

17. System nach einem der vorhergehenden Ansprüche,
**dadurch gekennzeichnet,**
**dass** der flexible Abstandshalter (32) ein Isolierband (40) umfasst.

18. System nach Anspruch 17,
**dadurch gekennzeichnet,**
**dass** der flexible Abstandshalter (32) zwischen dem Isolierband (42) und dem Außenkontakt (30) und zwischen dem Isolierband (40) und dem Innenkontakt (28) jeweils ein Laminat (42) aufweist.

19. System nach Anspruch 18,
**dadurch gekennzeichnet,**
**dass** die Laminate (42) jeweils mit dem Isolierband (40) und dem betreffenden Kontakt (38 bzw. 30) verklebt sind.
